# EUROPÄISCHE PATENTSCHRIFT

(11) **EP 3 428 349 B1**
(45) Veröffentlichungstag und Bekanntmachung des Hinweises auf die Patenterteilung: **24.08.2022**
(21) Anmeldenummer: 18174705.6
(22) Anmeldetag: 29.05.2018
(51) Int. Cl.: E02F 9/20

(54) **MANUELL BEDIENBARE STEUEREINRICHTUNG**
MANUALLY OPERABLE CONTROL DEVICE
DISPOSITIF DE COMMANDE POUVANT ÊTRE COMMANDÉ MANUELLEMENT

(30) Priorität: 14.07.2017 DE 102017115849
(43) Veröffentlichungstag der Anmeldung: 16.01.2019
(73) Patentinhaber: GRAMMER AG, 92289 Ursensollen (DE)
(72) Erfinder: Boving, Marko, 93049 Regensburg (DE)
(74) Vertreter: Hannke, Christian

(56) Entgegenhaltungen:
- DE-A1- 19 832 086
- JP-A- 2008 239 055
- US-A- 2 488 469

## Beschreibung

Die Erfindung betrifft eine manuell bedienbare Steuereinrichtung zum Ansteuern bewegbarer Elemente eines Fahrzeugs, gemäß dem Oberbegriff des Patentanspruches 1, und ein Fahrzeug gemäß dem Oberbegriff des Patentanspruches 10.

Fahrzeuge, die mit mehreren bewegbaren Elementen im Sinne von Funktionsbauteilen oder -baugruppen ausgestattet sind, verfügen herkömmlicherweise über Steuerelemente zur Ansteuerung dieser bewegbaren Elemente. Als Beispiele für solche Fahrzeuge seien hier ein Traktor, ein Gabelstapler oder auch ein Bagger als Aushubmaschine genannt. Der Traktor umfasst beispielsweise einen Frontlader, welcher mit einem ersten Ende schwenkbar am Traktor angeordnet ist. Am zweiten Ende ist beispielsweise eine Schaufel oder eine Gabel verschwenkbar angeordnet. Zwischen dem ersten und dem zweiten Ende sind beispielsweise mehrere Holme angeordnet, welche gegeneinander ebenfalls um mehrere Achsen verschwenkbar sein können.

Zur Ansteuerung von bewegbaren Elementen bzw. deren Bewegungsfunktionen sind aus dem Stand der Technik sogenannte Joysticks oder auch Steuerstangen bekannt, welche vom Benutzer des Fahrzeugs manuell bedienbar innerhalb der Fahrzeugkabine angeordnet sind. Das Problem bei den herkömmlichen Joysticks ist, dass die Bewegung, die der Fahrzeugführer zur Bewegung des Joysticks durchführen muss, bei mehrstündigen Schichten, wie sie bei der Feldarbeit oder dergleichen üblich sind, zu Überbeanspruchung, Ermüdungen, Missempfindung und Schmerzen vor allem in der Schulter des Benutzers des Fahrzeugs führen kann.

Gleichermaßen befasst sich die vorliegende Erfindung mit Steuereinrichtungen zur Lenkung und/ oder Beschleunigung von Fahrzeugen, insbesondere von Geländefahrzeugen (im Englischen auch "off-road vehicles" genannt). Aus der JP 2008 239055 A ist z.B. ein Fahrzeug mit einer Steuereinrichtung bekannt.

Aufgabe der vorliegenden Erfindung ist es also, die herkömmlichen Steuervorrichtungen soweit weiterzuentwickeln, dass damit ein weitgehend ermüdungs- und schmerzfreies Arbeiten möglich ist. Außerdem soll es ermöglicht werden, das Steuerelement mittels der erfindungsgemäßen Steuereinrichtung in einer Position zu halten.

Gelöst wird diese Aufgabe gemäß den Merkmalen des Patentanspruches 1 und den Merkmalen des Patentanspruches 10.

Ein wesentlicher Punkt der Erfindung liegt darin, dass eine manuell bedienbare Steuereinrichtung zum Ansteuern bewegbarer Elemente eines Fahrzeugs und/ oder zum Lenken oder Beschleunigen eines Fahrzeugs vorgesehen ist, umfassend ein Steuerstangenelement, welches innerhalb einer ersten Führungsbahn einer ersten Steuerscheibe und innerhalb einer zweiten Führungsbahn einer zweiten Steuerscheibe verschiebbar gelagert ist, wobei die erste Führungsbahn unterschiedlich zur zweiten Führungsbahn ausgestaltet ist und die beiden Steuerscheiben unabhängig voneinander um eine gemeinsame Achse endlos drehbar gelagert sind.

Durch die unterschiedliche Ausgestaltung der beiden Führungsbahnen kann nämlich vorteilhaft das Steuerstangenelement in seiner aktuellen Position gehalten werden, da es durch die Führung durch beide Führungsbahnen sicher gelagert wird. Zusätzlich dazu ist das Steuerstangenelement vorteilhaft mittels einer Drehung der beiden Steuerscheiben innerhalb der Führungsbahnen führbar.

Im Sinne der vorliegenden Erfindung wird die Position des Steuerstangenelements in Relation zur ersten und/ oder zur zweiten Steuerscheibe vorteilhaft in Polarkoordinaten angegeben. Ein Polarkoordinatensystem (auch: Kreiskoordinatensystem) ist ein zweidimensionales Koordinatensystem, in dem jeder Punkt in einer Ebene (beispielsweise vorliegend ein Positionspunkt des Steuerstangenelements in Relation zu einer Oberfläche, welche durch eine flächige Ausdehnung mindestens einer der beiden Steuerscheiben resultiert) durch einen Abstand r von einem vorgegebenen festen Punkt und einem Winkel ϕ zu einer festen Richtung festgelegt wird.

Beispielsweise entspricht der feste Punkt (auch Pol genannt) vorliegend der Position der gemeinsamen Achse bzw. Drehachse der beiden Steuerscheiben. Ferner entspricht beispielsweise eine frei wählbare Achse durch den festen Punkt der festen Richtung. Der Strahl zwischen dem Pol und dem Positionspunkt wird als Polarachse bezeichnet. Der Abstand r vom Pol wird als Radialkoordinate bezeichnet. Der Winkel ϕ wird als Winkelkoordinate bezeichnet.

Das Steuerstangenelement ist seitens eines Benutzers des Fahrzeugs bevorzugt manuell bedienbar. Die Gestaltung hinsichtlich einer endlosen Drehbarkeit der beiden Steuerscheiben sorgt für größtmögliche Flexibilität der abbildbaren Bewegungen. Bevorzugt ist die Drehbarkeit beider Steuerscheiben in beide Drehrichtungen endlos ausgestaltet. Durch die gemeinsame Drehachse kann die Bewegung der beiden Steuerscheiben vorteilhaft aufeinander abgestimmt werden.

Weiterhin bevorzugt ist das Steuerstangenelement zwar innerhalb der Führungsbahnen verschiebbar, jedoch gegenüber den Steuerscheiben und den Führungsbahnen nichtverschwenkbar angeordnet.

Dabei ist die gemeinsame Drehachse der beiden Steuerscheiben bevorzugt nur virtuell angeordnet, so dass insbesondere die Steuerscheiben an einer Position der gemeinsamen Drehachse frei von Elementen zu ihrer Drehlagerung sind. Weiter bevorzugt entspricht die gemeinsamen Drehachse dem Mittelpunkt der ersten und/ oder der zweiten Steuerscheibe; beispielsweise weisen die beiden Steuerscheiben im Wesentlichen eine Kreisform auf.

Bevorzugt ist ausgehend vom Steuerstangenelement zunächst die erste Steuerscheibe und dann die zweite Steuerscheibe in Richtung der gemeinsamen Achse angeordnet.

Die erste und/ oder die zweite Führungsbahn entsprechen beispielsweise einer Bahn, wie sie entsteht, wenn ein Rechteck oder ein Kreis mit einem bestimmten Durchmesser entlang jeweils einer Leitkurve entlang gezogen wird. Bevorzugt ist zumindest eine oder beide der Leitkurven jeweils zweidimensional.

Dabei ist es vorteilhaft, wenn die erste Führungsbahn eine geradlinige Form aufweist und/ oder durch die Achse verlaufend angeordnet ist.

Bevorzugt ist also die Relativbewegung zwischen dem Steuerstangenelement und der ersten Steuerscheibe eine reine Translationsbewegung. Wenn die erste Führungsbahn durch die gemeinsame Drehachse verläuft und das Steuerstangenelement an der Position der gemeinsamen Drehachse ist, so ist an diesem Punkt mittels einer Drehung der Steuerscheiben keine Bewegung des Steuerstangenelements auslösbar.

Wenn die gemeinsame Drehachse den Mittelpunkt der Steuerscheibe ausbildet und gleichzeitig die erste Führungsbahn eine geradlinige Form aufweist und durch die gemeinsame Drehachse verlaufend angeordnet ist, so ist mittels einer Relativbewegung zwischen erster Steuerscheibe und Steuerstangenelement jeder Punkt auf der Steuerscheibe abbildbar. Mit anderen Worten kann das Steuerstangenelement, insbesondere dessen Mittelpunkt oder dessen Mittelachse, unter den genannten Bedingungen jeden Punkt innerhalb des Umfangs der ersten Steuerscheibe anfahren. Möglich ist natürlich, dass hiervon die Punkte ganz außen am Umfang der ersten Steuerscheibe ausgenommen sind, wenn die flächige Ausdehnung des Steuerstangenelements in Richtung der flächigen Ausdehnung der ersten Steuerscheibe ein Anfahren der äußeren Punkte der Steuerscheibe mittels des Steuerstangenelements verhindert.

Weiterhin ist es bevorzugt, wenn die zweite Führungsbahn in Form einer Spirale ausgestaltet ist und/ oder durch die gemeinsame Achse verlaufend angeordnet ist.

Dabei verläuft die Spirale entlang einer zweidimensionalen Kurve, die ausgehend von ihrem Startpunkt um die gemeinsame Achse verlaufend und sich von dieser entfernend ausgestaltet ist.

Durch die Spiralform ist gewährleistet, dass entlang der Radialrichtung der zweiten Steuerscheibe mittels des Steuerstangenelements eine Vielzahl an Positionspunkten auf der zweiten Steuerscheibe abbildbar ist.

Im Sinne der vorliegenden Erfindung wird unter der Gesamtheit der Positionspunkte, die das Steuerstangenelement im Zusammenspiel mit der ersten Steuerscheibe abbilden kann, ein erster fixer und ein erster gesamter Bewegungsbereich (für die Bewegung des Steuerstangenelements auf der ersten Steuerscheibe bei fixer und bei sich drehender Steuerscheibe) verstanden. Analog dazu wird unter der Gesamtheit der Punkte, die das Steuerstangenelement im Zusammenspiel mit der zweiten Steuerscheibe abbilden kann, ein zweiter fixer und ein zweiter gesamter Bewegungsbereich (für die Bewegung des Steuerstangenelements auf der ersten Steuerscheibe bei fixer und bei sich drehender Steuerscheibe) verstanden.

Dabei entsprechen die ersten und zweiten fixen Bewegungsbereiche der ersten bzw. zweiten Führungsbahn. Die ersten und zweiten gesamten Bewegungsbereiche entsprechen vorteilhaft einem Kreisinhalt. Vorteilhaft ist der zugrunde liegende Kreis für beide Bewegungsbereiche mit gleichem Durchmesser ausgestaltet.

Bevorzugt ist die erste Führungsbahn so ausgestaltet, dass ein erster Endpunkt und ein zweiter Endpunkt der ersten Führungsbahn benachbart zum Außenumfang der ersten Steuerscheibe angeordnet sind. Im Sinne der vorliegenden Erfindung wird unter "benachbart" hier verstanden, dass ein Wert der Radialkoordinate des ersten und zweiten Endpunkts mindestens 90% des Radiuswertes der ersten Steuerscheibe beträgt. Mit anderen Worten gilt bevorzugt, dass r einen Bereich von 0 bis 0,9·R1 umfasst, wobei R1 der Radius der ersten Steuerscheibe ist.

Bevorzugt ist die zweite Führungsbahn so ausgestaltet, dass ein erster Endpunkt der zweiten Führungsbahn fluchtend zur gemeinsamen Achse angeordnet und ein zweiter Endpunkt benachbart zum Außenumfang der zweiten Steuerscheibe angeordnet ist. Im Sinne der vorliegenden Erfindung wird unter "benachbart" hier verstanden, dass ein Wert der Radialkoordinate des zweiten Endpunkts mindestens 90% des Radiuswertes der zweiten Steuerscheibe beträgt. Mit anderen Worten gilt bevorzugt, dass r einen Bereich von 0 bis 0,9·R2 umfasst, wobei R2 der Radius der zweiten Steuerscheibe ist.

Weiter bevorzugt weisen beide Radien R1 und R2 einen gleichen Wert auf.

Weiter bevorzugt ist die Spirale eine archimedische Spirale; das heißt, die Koordinaten eines Punkts auf der Spirale lassen sich mittels der Formel r = a·ϕ berechnen, wobei a eine Konstante ist. Mit anderen Worten gilt bevorzugt, dass der Quotient aus r und ϕ konstant ist. Ferner ist es bevorzugt, wenn ein Winkel zwischen einer Linie, welche durch einen beliebigen Punkt auf der Spirale und senkrecht zu dessen Radialkoordinate verläuft, und einer Tangente, welche durch den beliebigen Punkt und tangential zur Spirale verläuft, einen Wert aus einem Bereich von 2° bis 10°, weiter bevorzugt von 3° bis 7°, meist bevorzugt von 5° aufweist.

Ferner gilt bevorzugt, dass ϕ einen Bereich umfasst, dessen Anfang bei 0 liegt und dessen Ende in einem Bereich liegt, welcher 1,5π bis 2,5π umfasst. Bevorzugt ist das Ende bei 2π; die Spirale verläuft also genau einmal im Kreis herum bzw. einmal entlang des Umfangs der zweiten Steuerscheibe.

In diesem Fall ist es beispielsweise denkbar, dass der zuvor beschriebene Winkel zwischen der Linie, welche durch einen beliebigen Punkt auf der Spirale und senkrecht zu dessen Radialkoordinate verläuft, und der Tangente, welche durch den beliebigen Punkt und tangential zur Spirale verläuft, nur in einem Bereich von 0 bis 1,5π einen konstanten Wert aufweist. Bevorzugt ist der Winkel im Bereich von 1,5π bis 2π größer als im Bereich von 0 bis 1,5π. Soll in diesem Fall für alle Bereiche gelten, dass die Spirale eine archimedische Spirale ist, gilt für den Bereich von 0 bis 1,5π die Konstante a1 und für den Bereich 1,5π bis 2π die Konstante a2, wobei a2 bevorzugt kleiner als a1 ist.

In der Praxis hat es sich als vorteilhaft herausgestellt, wenn die beiden Steuerscheiben beabstandet und parallel zueinander verlaufend angeordnet sind und/ oder das Steuerstangenelement hinsichtlich seiner Längsrichtung stets orthogonal zu einer flächigen Ausdehnung mindestens einer der beiden Steuerscheiben angeordnet ist.

Diese Anordnung bietet dem Benutzer der Steuereinrichtung Platz, um mit einer Hand das Steuerstangenelement zu greifen, ohne dass sein Unterarm mit einer der Steuerscheiben kollidiert.

Ferner ist es bevorzugt, wenn die beiden Steuerscheiben hinsichtlich ihres Außenumfangs kongruent zueinander ausgebildet sind.

Es gilt weiterhin, dass bevorzugt in keiner mittels der Steuerungseinrichtung einstellbaren Relativposition der ersten Führungsbahn zur zweiten Führungsbahn diese beiden Führungsbahnen projiziert auf deren flächige Ausdehnung parallel zueinander angeordnet sind. Bevorzugt ist, dass die erste Führungsbahn und eine Tangente der zweiten Führungsbahn an der Position des Steuerstangenelements stets einen Winkel aus einem Bereich von 2 bis 10°, bevorzugt von 5° ausbilden. Dahingegen sind beide Führungsbahnen projiziert auf eine Höhenrichtung der Steuerungseinrichtung, welche bevorzugt der Längsrichtung des Steuerstangenelements entspricht, bevorzugt parallel zueinander angeordnet.

Bevorzugt weisen die beiden Führungsbahnen weiterhin jeweils mindestens einen Endpunkt auf, welcher den gleichen Abstand zur gemeinsamen Drehachse aufweist. Bevorzugt weisen beide Endpunkte der ersten Führungsbahn und ein zweiter Endpunkt der zweiten Führungsbahn den gleichen Abstand zur gemeinsamen Drehachse auf.

Um die Bedienung der Steuereinrichtung zu erleichtern, hat es sich insbesondere als vorteilhaft herausgestellt, wenn die erste und/ oder die zweite Steuerscheibe hinsichtlich einer Drehbewegung um die gemeinsame Drehachse jeweils mittels mindestens eines Antriebselements aktiv ansteuerbar sind. Das bedeutet insbesondere, dass eine Bewegung des Steuerstangenelements innerhalb der beiden gesamten Bewegungsbereiche aktiv unterstützbar ist.

Vorteilhaft sind die Antriebselemente so ausgestaltet, dass sie mit dem Außenumfang der beiden Steuerscheiben in Wirkverbindung stehen. Beispielsweise sind am Außenumfang der beiden Steuerscheiben Abtriebszahnelemente angeordnet, welche mit Antriebszahnelementen der Antriebselemente in Wirkverbindung stehen. Weiter bevorzugt umfassen die Antriebselemente neben den Antriebzahnelementen bürstenlose Gleichstrommotoren (BLDC) oder Schrittmotoren. Der Vorteil eines Schrittmotors ist beispielsweise, dass sich eine Drehung der Motorachsen und damit verbundener Elemente, wie beispielsweise der Antriebszahnelemente, hinsichtlich des einzustellenden Drehwinkels genau steuern lässt.

Um den Benutzer der Steuereinrichtung weiterhin zu entlasten, ist es vorteilhaft, wenn ein Rückstellelement angeordnet ist, mittels welchem das Steuerstangenelement passiv in eine Ausgangsstellung rückführbar ist. Dabei ist die Ausgangsstellung des Steuerstangenelements beispielsweise die Position, welcher der gemeinsamen Achse der Steuerscheiben entspricht. Das Rückstellelement ist beispielsweise als Schenkelfeder ausgestaltet, deren einer Schenkel starr gelagert ist und deren anderer Schenkel durch eine Bewegung des Steuerstangenelements gegen eine Rückstellkraft auslenkbar ist.

Außerdem ist es vorteilhaft, wenn ein Sensor zur Detektion einer Bewegungsrichtung des Steuerstangenelements am Steuerstangenelement und eine Steuerungseinheit angeordnet sind. In diesem Fall ist mittels des Sensors ein Signal an die übergeordnete Steuerungseinheit übermittelbar. Die Steuerungseinheit ist beispielsweise in Form einer SPS (Speicherprogrammierbare Steuerung) ausgestaltet. Eine SPS hat beispielsweise (Signal-)Eingänge, (Signal-)Ausgänge, ein Betriebssystem oder auch Firmware und eine Schnittstelle, über die ein Anwenderprogramm geladen werden kann. Das Anwenderprogramm legt fest, wie die Ausgänge in Abhängigkeit von den Eingängen geschaltet werden sollen.

Des Weiteren ist es vorteilhaft, wenn Signale des Sensors mittels der Steuerungseinheit in Signale an das mindestens eine Antriebselement der ersten/ und oder der zweiten Steuerscheibe übermittelbar sind. Diese Steuerungseinheit berechnet dann, beispielsweise mit Hilfe des Anwenderprogramms, mindestens ein Signal, welches an eines oder mehrere der Antriebselemente weitergebbar ist. Somit ist beispielsweise eine Bewegung des Steuerstangenelements in die detektierte Bewegungsrichtung unterstützbar (oder beschleunigbar) oder auch abbremsbar (oder verzögerbar).

Ferner ist es vorteilhaft, wenn ein Gehäuse angeordnet ist, innerhalb welchem die beiden Steuerscheiben, das jeweils mindestens eine Antriebselement und das Rückstellelement gelagert sind. Dies ist vorteilhaft, da die Lagerung der Elemente zueinander vorteilhaft mittels des Gehäuses ausgestaltet werden kann.

Die Aufgabe der Erfindung wird auch gelöst durch ein Fahrzeug, das mittels einer manuell bedienbaren Steuereinrichtung gemäß einem der Ansprüche 1-9 lenk- und/ oder beschleunigbar ist, und wird ferner gelöst durch ein Fahrzeug mit bewegbaren Elementen, welche mittels einer manuell bedienbaren Steuereinrichtung gemäß einem der Ansprüche 1-9 ansteuerbar sind.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1: ein Fahrzeug mit bewegbaren Elementen;
- Fig. 2: eine dreidimensionale Darstellung einer erfindungsgemäßen Steuereinrichtung;
- Fig. 3a-h: weitere dreidimensionale Darstellungen der erfindungsgemäßen Steuereinrichtung gemäß Fig. 2;
- Fig. 4a-g: Darstellungen verschiedener Positionspunkte des Steuerstangenelements;
- Fig. 5a, 5b: Darstellungen der ersten und der zweiten Führungsbahn;
- Fig. 6: eine Explosionsdarstellung der erfindungsgemäßen Steuereinrichtung gemäß Fig. 2;

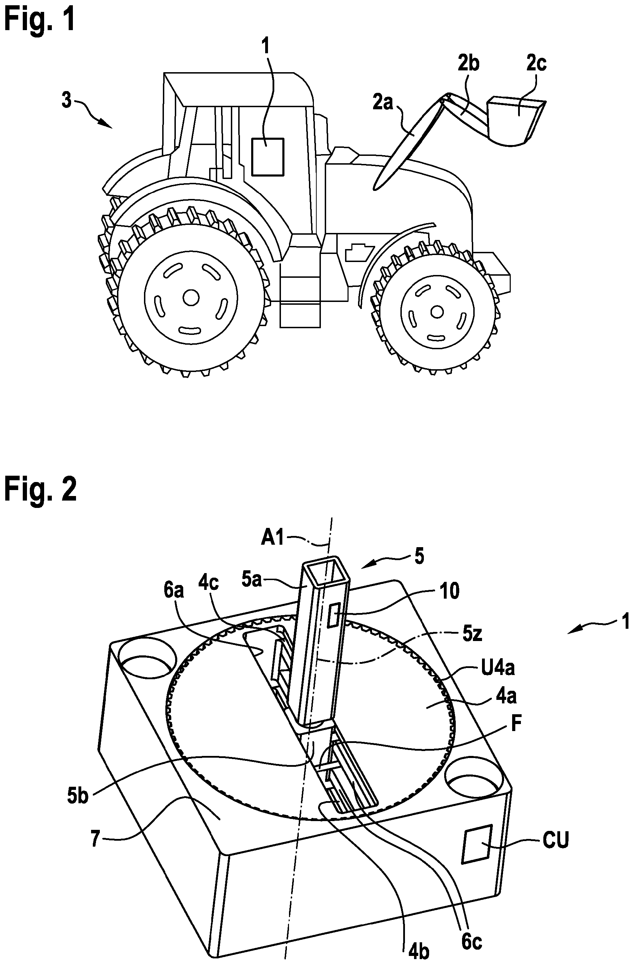

Gemäß Fig. 1 ist ein Fahrzeug 3 mit bewegbaren Elementen 2a, 2b, 2c gezeigt, wovon mindestens eines mittels einer manuell bedienbaren Steuereinrichtung 1 (nur schematisch im Fahrzeuginneren veranschaulicht) ansteuerbar ist. Vorliegend ist das Fahrzeug 3 ein Traktor und die bewegbaren Elemente beispielsweise der erste Holm 2a, der zweite Holm 2b oder nur die Schaufel 2c des Frontladers oder aber alle drei Elemente 2a, 2b, 2c. Ebenfalls möglich wäre, dass ein Pflug oder ein anderes Werkzeug (nicht gezeigt), welches beispielsweise mittels einer 3-Punkt-Anhängerkupplung an dem Traktor befestigt ist, eines der bewegbaren Elemente darstellt.

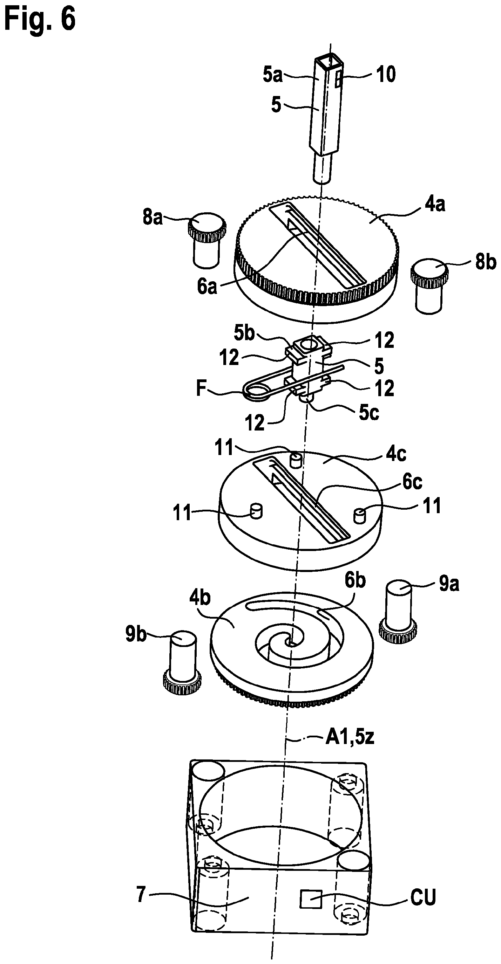

Gemäß der Fig. 2 ist die manuell bedienbare Steuereinrichtung 1 zum Ansteuern bewegbarer Elemente 2a, 2b, 2c eines Fahrzeugs 3 und/ oder zum Lenken und/ oder Beschleunigen des Fahrzeugs 3 in einer perspektivischen Ansicht gezeigt, umfassend ein Steuerstangenelement 5, welches innerhalb einer ersten Führungsbahn 6a einer ersten Steuerscheibe 4a und innerhalb einer zweiten Führungsbahn 6b (siehe Fig. 6) einer zweiten Steuerscheibe 4b (siehe Fig. 6) verschiebbar gelagert ist, wobei die erste Führungsbahn 6a unterschiedlich zur zweiten Führungsbahn 6b ausgestaltet ist und die beiden Steuerscheiben 4a, 4b unabhängig voneinander um eine gemeinsame Achse A1 endlos drehbar gelagert sind.

Vorliegend entspricht der feste Punkt der dem Steuerstangenelement 5 zugeordneten Polarkoordinaten vorliegend der Position der gemeinsamen Drehachse A1 der beiden Steuerscheiben 4a, 4b.

Das Steuerstangenelement 5 ist seitens eines Benutzers des Fahrzeugs 3 manuell bedienbar. Dabei ist die Drehachse A1 vorliegend nur virtuell angeordnet, so dass die Steuerscheiben 4a, 4b an einer Position der Drehachse A1 frei von Elementen zu ihrer Drehlagerung sind. Vorliegend entspricht die erste Drehachse A1 dem Mittelpunkt der ersten 4a und dem Mittelpunkt der zweiten Steuerscheibe 4b.

Die erste 6a und die zweite Führungsbahn 6b entsprechen dabei einer Bahn, wie sie entsteht, wenn ein Rechteck (erste Führungsbahn 6a) oder ein Kreis (zweite Führungsbahn 6b) mit einem bestimmten Durchmesser entlang jeweils einer Leitkurve entlang gezogen wird. Dabei ist die Leitkurve jeweils zweidimensional.

Dabei weist die erste Führungsbahn 6a eine geradlinige Form auf und ist durch die Achse A1 verlaufend angeordnet. Die Relativbewegung zwischen dem Steuerstangenelement 5 und der ersten Steuerscheibe 4a ist daher eine reine Translationsbewegung. Da die erste Führungsbahn 6a vorliegend durch die gemeinsame Drehachse A1 verläuft und das Steuerstangenelement 5 gemäß der Fig. 2 an der Position der gemeinsamen Drehachse A1 ist, ist in diesem Fall mittels einer Drehung der Steuerscheiben 4a, 4b keine Relativbewegung des Steuerstangenelements 5 gegenüber einer der Steuerscheiben 4a, 4b auslösbar.

Da die gemeinsame Drehachse A1 den Mittelpunkt der ersten Steuerscheibe 4a ausbildet und gleichzeitig die erste Führungsbahn 6a eine geradlinige Form aufweist und durch die Drehachse A1 verlaufend angeordnet ist, ist mittels einer Relativbewegung zwischen erster Steuerscheibe 4a und Steuerstangenelement 5 und mittels einer Relativbewegung zwischen erster Steuerscheibe 4a und dem Gehäuse 7 jeder Punkt auf der Steuerscheibe abbildbar.

Mit anderen Worten kann das Steuerstangenelement 5, insbesondere dessen Mittelpunkt oder dessen Mittelachse, unter den genannten Bedingungen jeden Punkt innerhalb des Umfangs U4a der ersten Steuerscheibe 4a anfahren. Hiervon ausgenommen sind die Punkte ganz außen am Umfang U4a der ersten Steuerscheibe 4a, da die flächige Ausdehnung des Steuerstangenelements 5 in Richtung der flächigen Ausdehnung der ersten Steuerscheibe 4a ein Anfahren der äußeren Punkte der Steuerscheibe 4a mittels des Steuerstangenelements 5 verhindert.

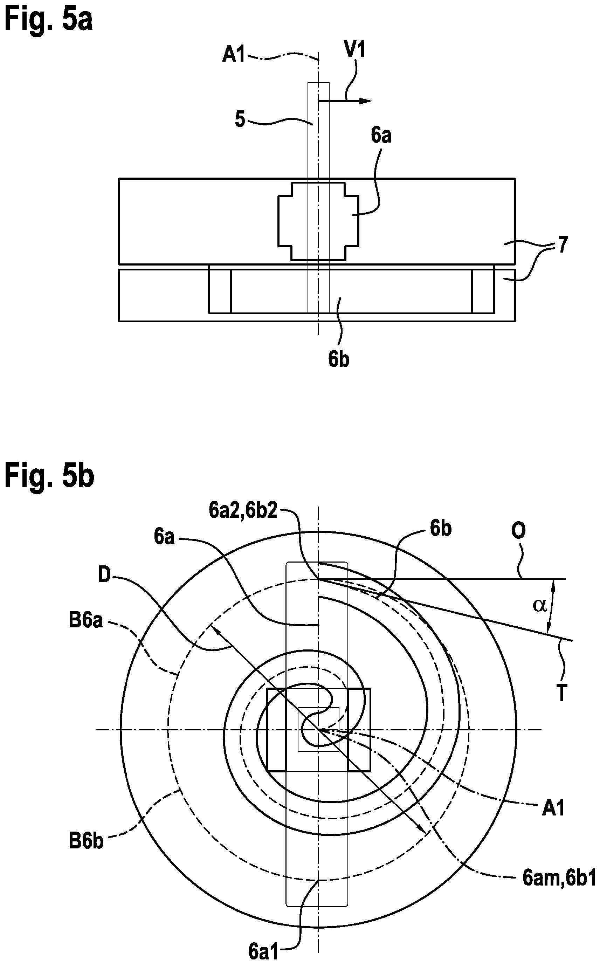

Gemäß den Fig. 5b und 6 ist außerdem gezeigt, dass die zweite Führungsbahn 6b in Form einer Spirale ausgestaltet ist und durch die Achse A1 verlaufend angeordnet ist. Dabei folgt die Spirale einer Kurve, die ausgehend von der Achse A1 um die Achse A1 verlaufend und sich von dieser entfernend ausgestaltet ist.

Die Fig. 5b zeigt außerdem die ersten und zweiten fixen Bewegungsbereiche des Steuerstangenelements 5, welche vorliegend den beiden Führungsbahnen 6a, 6b entsprechen, sowie die ersten und zweiten gesamten Bewegungsbereiche B6a, B6b des Steuerstangenelements 5.

Vorliegend sind beide Endpunkte 6a1, 6a2 der ersten Führungsbahn 6a und ein zweiter Endpunkt 6b2 der zweiten Führungsbahn 6b auf einem gemeinsamen Durchmesser D in Bezug auf die gemeinsame Drehachse A1 angeordnet; sie weisen also jeweils den gleichen Abstand zur Achse A1 auf. Ein Mittenpunkt 6am, welcher die Führungsbahn 6a in zwei gleiche Hälften teilend angeordnet ist, und ein erster Endpunkt der zweiten Führungsbahn 6b sind dabei positionsgleich zueinander und positionsgleich zur gemeinsamen Drehachse A1.

Bei der Darstellung der Endpunkte wurde berücksichtigt, dass die Teile des Steuerstangenelements 5, welche innerhalb der Führungsbahnen 6a, 6b geführt werden, eine flächige Ausdehnung besitzen. Daher fällt die Berandung der Führungsbahnen 6a, 6b nicht mit den Endpunkten 6a1, 6a2, 6b1, 6b2 zusammen.

Der erste B6a und der zweite gesamte Bewegungsbereich B6b sind vorliegend kongruent und entsprechen einem Kreisinhalt eines Kreises mit dem Durchmesser D.

Die Spirale gemäß der vorliegenden zweiten Führungsbahn ist eine archimedische Spirale, wobei der Winkel ϕ einen Bereich von 0 bis 2π umfasst.

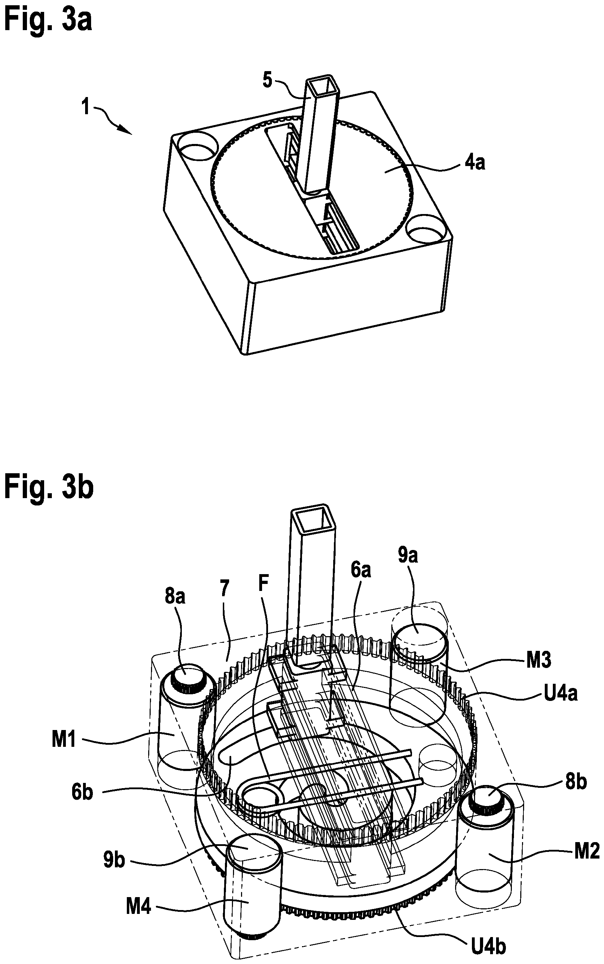

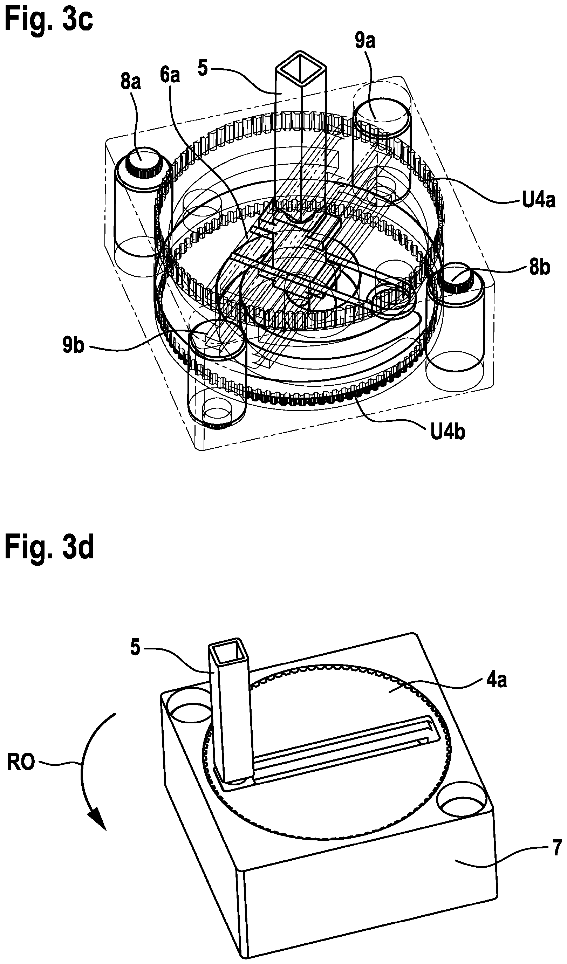

Die Figuren 3d bis 3h zeigen außerdem verschiedene Bewegungen, welche mittels der Steuereinrichtung 1 abbildbar sind. Gemäß der Fig. 3d ist eine reine Rotationsbewegung RO des Steuerstangenelements 5 gemeinsam mit den beiden Steuerscheiben 4a, 4b gezeigt. Bei dieser Bewegung RO bewegen sich die genannten Elemente 4a, 4b und 5 zueinander nicht. Alle drei Elemente 4a, 4b und 5 zusammen bewegen sich jedoch in Relation zum Gehäuse 7 und zu den Antriebselementen 8a, 8b, 9a, 9b. Beispielsweise wird diese Rotationsbewegung RO zur Lenkung des Fahrzeugs 3 eingesetzt.

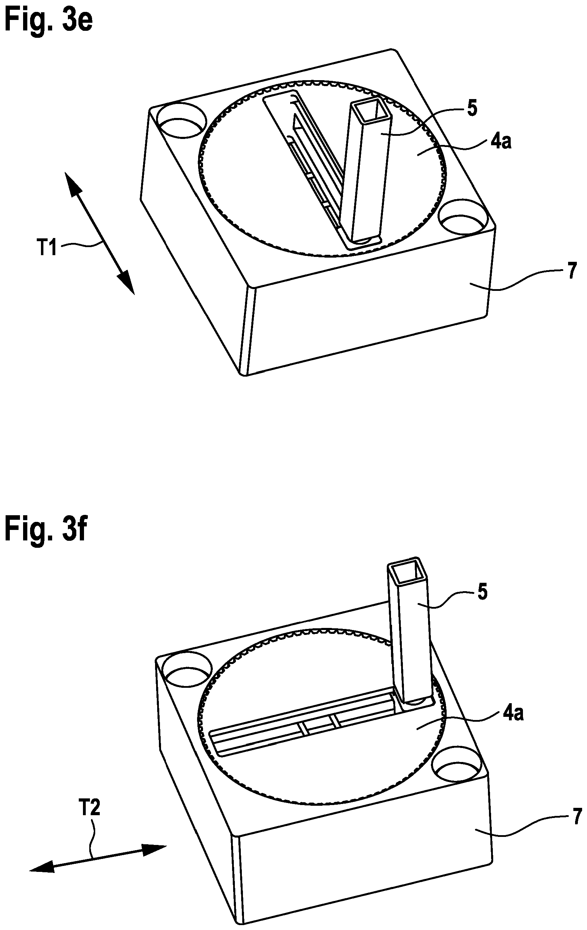

Gemäß den Figuren 3e und 3f ist jeweils eine reine Translationsbewegung T1, T2 in verschiedene Richtungen gezeigt. Dabei bewegt sich die erste Steuerscheibe 4a in Relation zum Gehäuse 7 und zu den Antriebselementen 8a, 8b, 9a, 9b nicht. Es bewegen sich jedoch sowohl die zweite Steuerscheibe 4b in Relation zur ersten Steuerscheibe 4a als auch das Steuerstangenelement 5 in Relation zur ersten 4a und zur zweiten Steuerscheibe 4b. Beispielsweise wird diese Translationsbewegung T1, T2 zur Beschleunigung des Fahrzeugs 3 eingesetzt.

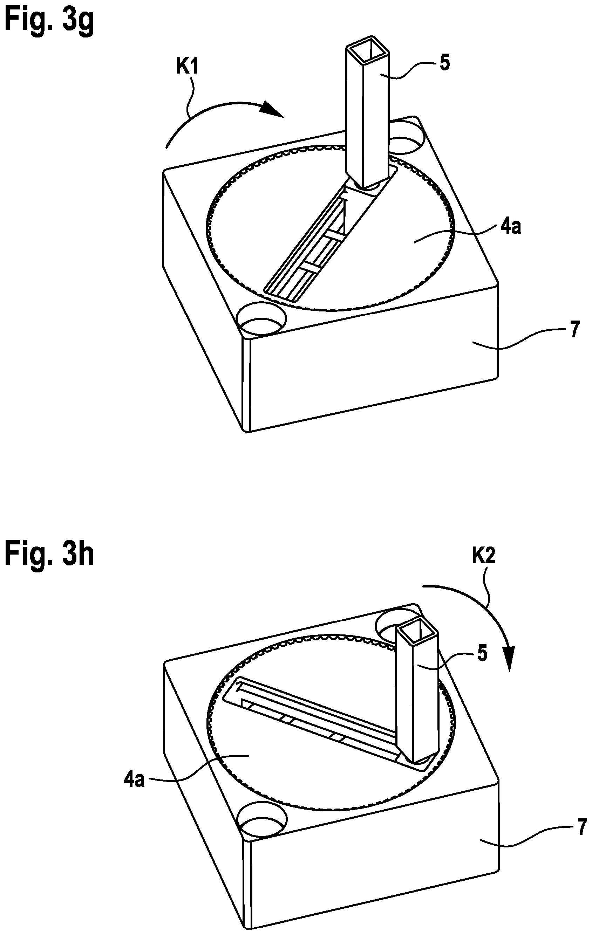

Schließlich veranschaulichen die Figuren 3g und 3h jeweils eine kombinierte Bewegung K1, K2. Dabei bewegen sich die Elemente 4a, 4b, 5 jeweils zueinander und auch in Relation zum Gehäuse 7 und zu den Antriebselementen 8a, 8b, 9a, 9b.

Das Gehäuse 7 und die Antriebselemente 8a, 8b, 9a, 9b sind dabei zueinander zumindest hinsichtlich einer Position der Achsen der Motoren M1, M2, M3, M4 der Antriebselemente 8a, 8b, 9a, 9b starr angeordnet.

Die beiden Steuerscheiben 4a, 4b sind vorliegend beabstandet und in Richtung der Achse A1 parallel zueinander verlaufend angeordnet (siehe Fig. 2). Ferner ist das Steuerstangenelement 5 hinsichtlich seiner Längsrichtung 5z stets orthogonal zu einer flächigen Ausdehnung der beiden Steuerscheiben 4a, 4b angeordnet. Vorliegend fallen die Längsrichtung 5z und die gemeinsame Drehachse A1 zusammen.

Fig. 5b zeigt weiterhin, dass eine Orthogonale O der ersten Führungsbahn 6a und eine Tangente T der zweiten Führungsbahn 6b an der Position des Steuerstangenelements 5 einen Winkel α von 5° ausbilden; dies gilt vorliegend für alle denkbaren Positionen des Steuerstangenelements 5. Dahingegen sind gemäß Fig. 5a beide Führungsbahnen 6a, 6b projiziert auf Richtung der Achse A1 parallel zueinander angeordnet.

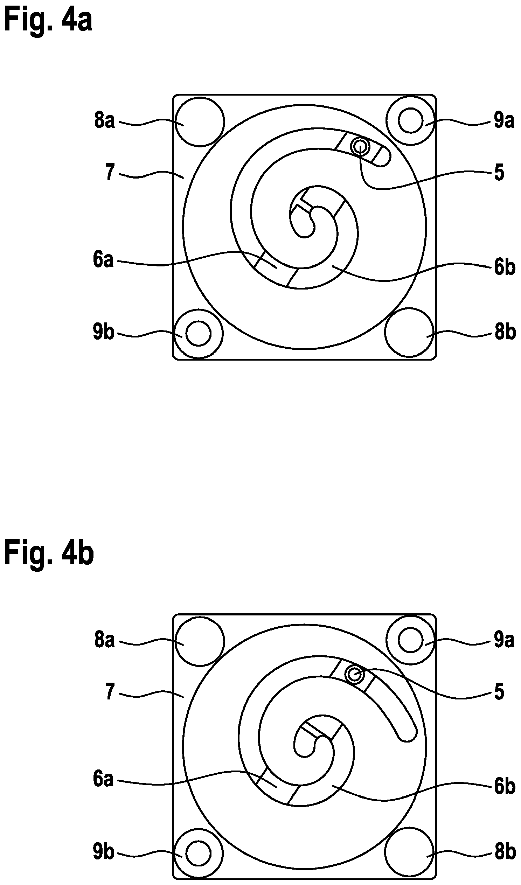

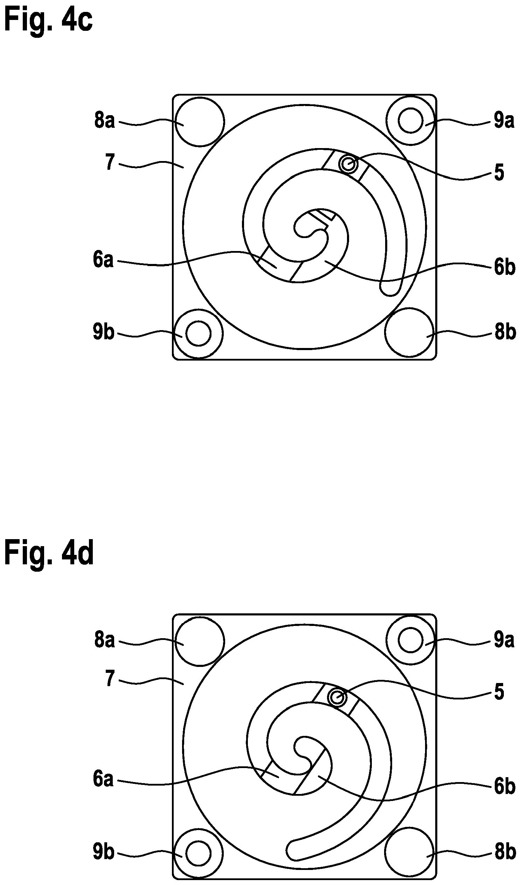

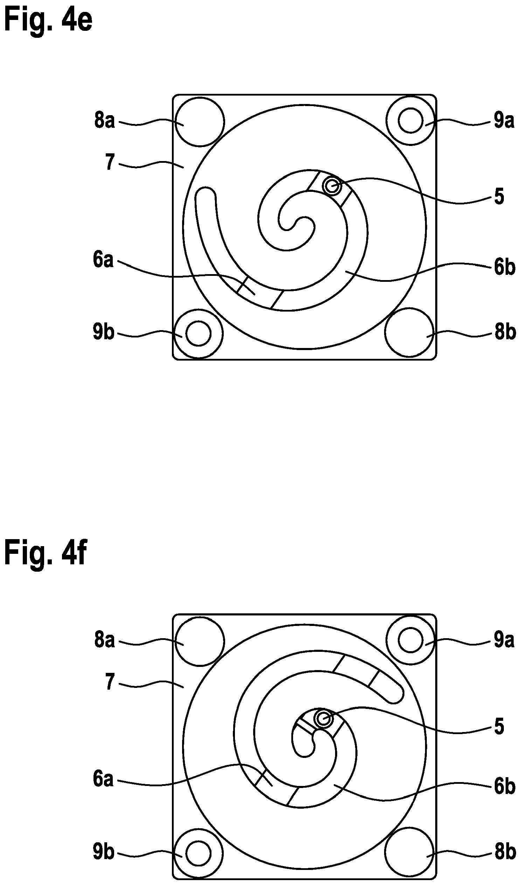

Gemäß den Figuren 4a-4g (hier ist die Steuereinheit 1 von unten gezeigt) ist weiterhin eine Bewegungsabfolge des Steuerstangenelements 5 entlang der ersten Führungsbahn 6a gezeigt, wobei die Position der ersten Steuerscheibe 4a in Relation zum Gehäuse 7 hier starr bleibt. Zu sehen ist, dass zur Ausübung dieser Bewegung sich die zweite Steuerscheibe 4b entsprechend mitdrehen muss, so dass das Steuerstangenelement 5 immer sicher gelagert ist.

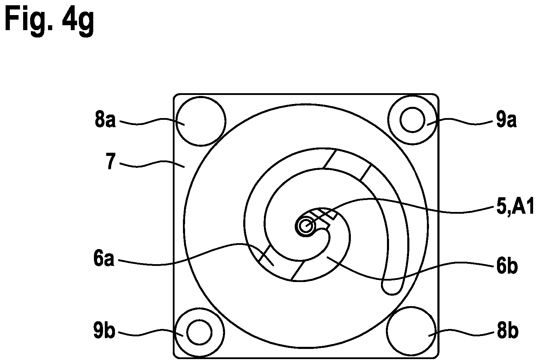

Ebenfalls gemäß den Figuren 4a-4g zu sehen ist, dass in keiner gezeigten Relativposition der ersten Führungsbahn 4a zur zweiten Führungsbahn 4b diese beiden Führungsbahnen 4a, 4b parallel zueinander angeordnet sind. Gemäß der Fig. 4g ist das Steuerstangenelement 5 so angeordnet, dass es mit der gemeinsamen Achse A1 fluchtet.

Die Figuren 3b, 3c sowie 6 zeigen, dass die erste 4a und die zweite Steuerscheibe 4b hinsichtlich einer Drehbewegung um die Achse A1 jeweils mittels zweier Antriebselemente 8a, 8b, 9a, 9b aktiv ansteuerbar sind. Dabei sind am Außenumfang U4a, U4b der beiden Steuerscheiben 4a, 4b Abtriebszahnelemente angeordnet, welche mit Antriebszahnelementen der Antriebselemente 8a, 8b, 9a, 9b in Wirkverbindung stehen (gemäß Fig. 3b und 3b nur schematisch gezeigt; gemäß Fig. 6 sind die schematisch veranschaulichten Abtriebszahnelemente und Antriebszahnelemente jeweils auf einem gemeinsamen Teilkreis angeordnet). Diese Antriebszahnelemente stehen wiederum in Verbindung mit Schrittmotoren M1, M2, M3, M4 der Antriebselemente 8a, 8b, 9a, 9b, durch deren Bewegung eine Bewegung der Antriebszahnelemente erzielbar ist.

Um den Benutzer der Steuereinrichtung 1 weiterhin zu entlasten, ist ein Rückstellelement F (siehe Fig. 2 und 6) angeordnet, mittels welchem das Steuerstangenelement 5 passiv in eine Ausgangsstellung rückführbar ist. Dabei ist die Ausgangsstellung vorliegend die Position, welcher der Position des Steuerstangenelements 5 an der gemeinsamen Drehachse A1 entspricht. Das Rückstellelement F ist als Schenkelfeder ausgestaltet, deren einer Schenkel starr ist und deren anderer Schenkel durch eine Bewegung des Steuerstangenelements 5 gegen eine Rückstellkraft auslenkbar ist.

Außerdem ist ein Sensor 10 (siehe Fig. 2 und 6) zur Detektion einer Bewegungsrichtung V1 (siehe Fig. 5a) des Steuerstangenelements 5 am Steuerstangenelement 5 und eine Steuerungseinheit CU angeordnet (siehe Fig. 2 und 6). In diesem Fall ist mittels des Sensors 10 ein Signal an die übergeordnete Steuerungseinheit CU übermittelbar. Diese berechnet dann mindestens ein Signal, welches an eines oder mehrere der Antriebselemente 8a, 8b, 9a, 9b weitergebbar ist. Somit ist beispielsweise eine Bewegung des Steuerstangenelements 5 in die detektierte Bewegungsrichtung V1 unterstützbar oder auch abbremsbar.

Ferner ist ein Gehäuse 7 angeordnet (siehe Fig. 2), innerhalb welchem die beiden Steuerscheiben 4a, 4b, die Antriebselemente 8a, 8b, 9a, 9b und das Rückstellelement F gelagert sind. Ebenfalls ist die Steuerungseinheit CU innerhalb des Gehäuses angeordnet.

Gemäß der Fig. 6 ist außerdem gezeigt, dass das Steuerstangenelement 5 drei Elemente 5a, 5b, 5c umfasst. Das erste Element 5a ist im Wesentlichen oberhalb der beiden Steuerscheiben 6a, 6b angeordnet und dient dem Benutzer als Handgriff. Am unteren Ende des ersten Elements 5a ist ein Wellenelement ausgebildet, welches zu einem zweiten Element 5b des Steuerstangenelements 5 drehbar gelagert ist.

Am unteren Ende des zweiten Elements 5b ist ein drittes Element 5c in Form eines Wellenelements angeordnet, wobei das Steuerstangenelement 5 mittels des dritten Elements 5c innerhalb der zweiten Führungsbahn 6b verschiebbar angeordnet ist. Das zweite Element 5b weist ferner zwei innenschienenartige Abschnitte 12 auf, mittels welchen es zwischen der ersten Steuerscheibe 6a und einer Zwischenscheibe 4c bzw. der Zwischenscheibe 4c und der zweiten Steuerscheibe 6b verschiebbar gelagert ist (siehe Fig. 2). Zwischenräume zwischen der ersten Steuerscheibe 6a und der Zwischenscheibe 4c und zwischen der Zwischenscheibe 4c und der zweiten Steuerscheibe 6b bilden somit führungsschienenartige Abschnitte zum Führen der innenschienenartige Abschnitte 12 aus.

Ausgehend vom Steuerstangenelement 5 ist also zunächst die erste Steuerscheibe 4a, dann die Zwischenscheibe 4c und dann die zweite Steuerscheibe 4b in Richtung der Achse A1 angeordnet.

Dabei weist die Zwischenscheibe 4c ebenfalls eine Führungsbahn 6c auf, welche vorliegend zur ersten Führungsbahn 6a identisch ausgestaltet ist. Fig. 6 zeigt weiterhin drei Positionierelemente 11, mittels welcher eine Position der Zwischenscheibe 4c in Relation zur ersten Steuerscheibe 4a arretierbar ist. Ferner weist die Zwischenscheibe 4c eine Aussparung auf, innerhalb welcher das Rückstellelement F anordenbar ist. Eine flächige Ausdehnung des Rückstellelements F sowie der Aussparung der Zwischenscheibe 4c ist dabei parallel zur flächigen Ausdehnung der Scheiben 4a, 4b, 4c angeordnet.

### Bezugszeichenliste

- 1: Steuereinrichtung
- 2a, 2b, 2c: bewegbares Element
- 3: Fahrzeug
- 4a, 4b: Steuerscheibe
- 4c: Zwischenscheibe
- 5: Steuerstangenelement
- 5a, 5b, 5c: Elemente
- 5z: Längsrichtung
- 6a, 6b: Führungsbahn
- 6a1, 6a2: erster Endpunkt
- 6a2, 6b2: zweiter Endpunkt
- 6am: Mittenpunkt
- 7: Gehäuse
- 8a, 8b, 9a, 9b: Antriebselement
- 10: Sensor
- 11: Positionierelemente
- 12: innenschienenartige Elemente
- A1: gemeinsame Drehachse
- B6a, B6b: gesamter Bewegungsbereich
- CU: Steuerungseinheit
- D: Durchmesser
- F: Rückstellelement
- M1, M2, M3, M4: Motor
- O: Orthogonale
- T: Tangente
- T1, T2: Translationsbewegung
- r: Radialkoordinate
- RO: Rotationsbewegung
- R1, R2: Radius der Steuerscheibe
- K1, K2: kombinierte Bewegung
- U4a, U4b: Umfang
- V1: Bewegungsrichtung
- α, ϕ: Winkel

## Patentansprüche

1. Manuell bedienbare Steuereinrichtung (1) zum Ansteuern bewegbarer Elemente (2a, 2b, 2c) eines Fahrzeugs (3) und/ oder zum Lenken oder Beschleunigen des Fahrzeugs (3), umfassend ein Steuerstangenelement (5), welches innerhalb einer ersten Führungsbahn (6a) einer ersten Steuerscheibe (4a) und innerhalb einer zweiten Führungsbahn (6b) einer zweiten Steuerscheibe (4b) verschiebbar gelagert ist,
wobei die erste Führungsbahn (6a) unterschiedlich zur zweiten Führungsbahn (6b) ausgestaltet ist und die beiden Steuerscheiben (4a, 4b) unabhängig voneinander drehbar gelagert sind,
**dadurch gekennzeichnet, dass**
die beiden Steuerscheiben (4a, 4b) unabhängig voneinander um eine gemeinsame Achse (A1) endlos drehbar gelagert sind.

2. Manuell bedienbare Steuereinrichtung (1) nach Anspruch 1,
**dadurch gekennzeichnet, dass**
die erste Führungsbahn (6a) eine geradlinige Form aufweist und/ oder durch die gemeinsame Achse (A1) verlaufend angeordnet ist.

3. Manuell bedienbare Steuereinrichtung (1) nach Anspruch 1 oder 2,
**dadurch gekennzeichnet, dass**
die zweite Führungsbahn (6b) in Form einer Spirale ausgestaltet ist und/ oder durch die gemeinsame Achse (A1) verlaufend angeordnet ist.

4. Manuell bedienbare Steuereinrichtung (1) nach einem der vorhergehenden Ansprüche,
**dadurch gekennzeichnet, dass**
die beiden Steuerscheiben (4a, 4b) beabstandet und parallel zueinander verlaufend angeordnet sind und/ oder das Steuerstangenelement (5) hinsichtlich seiner Längsrichtung (5z) stets orthogonal zu einer flächigen Ausdehnung mindestens einer der beiden Steuerscheiben (4a, 4b) angeordnet ist.

5. Manuell bedienbare Steuereinrichtung (1) nach einem der vorhergehenden Ansprüche,
**dadurch gekennzeichnet, dass**
die erste (4a) und/ oder die zweite Steuerscheibe (4b) hinsichtlich einer Drehbewegung um die Achse (A1) jeweils mittels mindestens eines Antriebselements (8a, 8b, 9a, 9b) aktiv ansteuerbar sind.

6. Manuell bedienbare Steuereinrichtung (1) nach einem der vorhergehenden Ansprüche,
**dadurch gekennzeichnet, dass**
ein Rückstellelement (F) angeordnet ist, mittels welchem das Steuerstangenelement (5) passiv in eine Ausgangsstellung rückführbar ist.

7. Manuell bedienbare Steuereinrichtung (1) nach einem der vorhergehenden Ansprüche,
**dadurch gekennzeichnet, dass**
ein Sensor (10) zur Detektion einer Bewegungsrichtung des Steuerstangenelements (5) am Steuerstangenelement (5) und eine Steuerungseinheit (CU) angeordnet sind.

8. Manuell bedienbare Steuereinrichtung (1) nach einem der vorhergehenden Ansprüche,
**dadurch gekennzeichnet, dass**
ein Gehäuse (7) angeordnet ist, innerhalb welchem die beiden Steuerscheiben (4a, 4b), das jeweils mindestens eine Antriebselement (8a, 8b, 9a, 9b) und das Rückstellelement (F) gelagert sind.

9. Manuell bedienbare Steuereinrichtung (1) nach einem der vorhergehenden Ansprüche,
**dadurch gekennzeichnet, dass**
Signale des Sensors (10) mittels der Steuerungseinheit (CU) in Signale an das mindestens eine Antriebselement (8a, 8b, 9a, 9b) der ersten/ und oder der zweiten Steuerscheibe (4a, 4b) übermittelbar sind.

10. Fahrzeug (3), das mittels einer manuell bedienbaren Steuereinrichtung (1) gemäß einem der Ansprüche 1-9 lenk- und/ oder beschleunigbar ist, oder mit mindestens einem bewegbaren Element (2a, 2b, 2c), das mittels einer manuell bedienbaren Steuereinrichtung (1) gemäß einem der Ansprüche 1-9 ansteuerbar ist.

## Claims

1. Manually operable control device (1) for controlling movable elements (2a, 2b, 2c) of a vehicle (3) and/or for steering or accelerating the vehicle (3), comprising a control rod element (5), which is mounted so as to be slidable within a first guide path (6a) of a first control disc (4a) and within a second guide path (6b) of a second control disc (4b),
the first guide path (6a) being designed differently from the second guide path (6b) and the two control discs (4a, 4b) being mounted so as to rotate independently of one another,
**characterised in that**
the two control discs (4a, 4b) are mounted so as to rotate independently about a common axis (A1) in a continuous manner.

2. Manually operable control device (1) according to claim 1,
**characterised in that**
the first guide path (6a) is straight and/or is arranged so as to extend through the common axis (A1).

3. Manually operable control device (1) according to either claim 1 or claim 2,
**characterised in that**
the second guide path (6b) is designed as a spiral and/or is arranged so as to extend through the common axis (A1).

4. Manually operable control device (1) according to any of the preceding claims,
**characterised in that**
the two control discs (4a, 4b) are arranged so as to be spaced apart from one another and so as to extend in parallel with one another and/or the control rod element (5) is arranged so as to be constantly orthogonal, with regard to the longitudinal direction (5z) thereof, to a planar extension of at least one of the two control discs (4a, 4b).

5. Manually operable control device (1) according to any of the preceding claims,
**characterised in that**
the first control disc (4a) and/or the second control disc (4b) can be actively controlled in terms of a rotational movement about the axis (A1) by means of at least one drive element (8a, 8b, 9a, 9b) in each case.

6. Manually operable control device (1) according to any of the preceding claims,
**characterised in that**
a restoring element (F) is provided, by means of which the control rod element (5) can be passively guided back into a starting position.

7. Manually operable control device (1) according to any of the preceding claims,
**characterised in that**
a sensor (10) for detecting a movement direction of the control rod element (5) is arranged on the control rod element (5) and a control unit (CU) is provided.

8. Manually operable control device (1) according to any of the preceding claims,
**characterised in that**
a housing (7) is provided, inside which the two control discs (4a, 4b), the in each case at least one drive element (8a, 8b, 9a, 9b) and the restoring element (F) are mounted.

9. Manually operable control device (1) according to any of the preceding claims,
**characterised in that**
signals of the sensor (10) can be transmitted by means of the control unit (CU) to the at least one drive element (8a, 8b, 9a, 9b) of the first control disc and/or second control disc (4a, 4b).

10. Vehicle (3), which can be steered and/or accelerated by means of a manually operable control device (1) according to any of claims 1-9, or comprising at least one movable element (2a, 2b, 2c) that can be controlled by means of a manually operable control device (1) according to any of claims 1-9.

## Revendications

1. Dispositif de commande (1) à actionnement manuel pour la commande d'éléments mobiles (2a, 2b, 2c) d'un véhicule (3) et/ou pour la direction ou l'accélération du véhicule (3), comportant un élément barre de commande (5), lequel est monté déplaçable à l'intérieur d'une première voie de guidage (6a) d'un premier disque de commande (4a) et à l'intérieur d'une seconde voie de guidage (6b) d'un second disque de commande (4b),
la première voie de guidage (6a) étant conçue différemment de la seconde voie de guidage (6b) et les deux disques de commande (4a, 4b) étant montés rotatifs, indépendamment l'un de l'autre,
**caractérisé par le fait que**
les deux disques de commande (4a, 4b) sont montés rotatifs indépendamment l'un de l'autre autour d'un axe commun (A1) d'une manière continue.

2. Dispositif de commande (1) à actionnement manuel selon la revendication 1,
**caractérisé par le fait que**
la première voie de guidage (6a) présente une forme rectiligne et/ou est disposée de manière à passer par l'axe commun (A1).

3. Dispositif de commande (1) à actionnement manuel selon l'une des revendications 1 ou 2,
**caractérisé par le fait que**
la seconde voie de guidage (6b) est réalisée sous la forme d'une spirale et/ou est disposée de manière à passer par l'axe commun (A1).

4. Dispositif de commande (1) à actionnement manuel selon l'une des revendications précédentes, **caractérisé par le fait que**
les deux disques de commande (4a, 4b) sont disposés à distance et s'étendant parallèlement l'un à l'autre et/ou l'élément barre de commande (5) est disposé, en ce qui concerne sa direction longitudinale (5z), toujours orthogonalement à une étendue plane d'au moins l'un des deux disques de commande (4a, 4b).

5. Dispositif de commande (1) à actionnement manuel selon l'une des revendications précédentes, **caractérisé par le fait que**
le premier (4a) et/ou le second disque de commande (4b) sont aptes à être commandés activement en ce qui concerne un mouvement de rotation autour de l'axe (A1) chacun au moyen d'au moins un élément d'entraînement (8a, 8b, 9a, 9b).

6. Dispositif de commande (1) à actionnement manuel selon l'une des revendications précédentes, **caractérisé par le fait qu'**
un élément de rappel (F) est disposé, au moyen duquel l'élément barre de commande (5) est apte à être renvoyé passivement dans une position initiale.

7. Dispositif de commande (1) à actionnement manuel selon l'une des revendications précédentes, **caractérisé par le fait qu'**
un capteur (10) pour la détection d'une direction de déplacement de l'élément barre de commande (5) sur l'élément barre de commande (5) et une unité de commande (CU) sont disposés.

8. Dispositif de commande (1) à actionnement manuel selon l'une des revendications précédentes, **caractérisé par le fait qu'**
un boîtier (7) est disposé, à l'intérieur duquel sont montés les deux disques de commande (4a, 4b), ledit au moins un élément d'entraînement respectif (8a, 8b, 9a, 9b) et l'élément de rappel (F).

9. Dispositif de commande (1) à actionnement manuel selon l'une des revendications précédentes, **caractérisé par le fait que**
des signaux du capteur (10) sont aptes à être transmis au moyen de l'unité de commande (CU) en signaux audit au moins un élément d'entraînement (8a, 8b, 9a, 9b) du premier et/ou du second disque de commande (4a, 4b).

10. Véhicule (3) qui peut être dirigé et/ou accéléré au moyen d'un dispositif de commande (1) à actionnement manuel selon l'une des revendications 1 à 9, ou avec au moins un élément mobile (2a, 2b, 2c), qui est apte à être commandé au moyen d'un dispositif de commande (1) à actionnement manuel selon l'une des revendications 1 à 9.
